Europäisches Patentamt

European Patent Office

Office européen des brevets

(19)

(11) Veröffentlichungsnummer: **0 185 678**
**B1**

(12) # EUROPÄISCHE PATENTSCHRIFT

(45) Veröffentlichungstag der Patentschrift:
16.09.87

(21) Anmeldenummer: 85901965.5

(22) Anmeldetag: 15.05.85

(86) Internationale Anmeldenummer:
PCT/CH 85/00083

(87) Internationale Veröffentlichungsnummer:
WO 85/05337 (05.12.85 Gazette 85/26)

(51) Int. Cl.⁴: **B 62 D 33/04,** B 62 D 27/02

(54) **WAGENKASTENAUFBAU.**

(30) Priorität: 21.05.84 CH 2492/84

(43) Veröffentlichungstag der Anmeldung:
02.07.86 Patentblatt 86/27

(45) Bekanntmachung des Hinweises auf die Patenterteilung:
16.09.87 Patentblatt 87/38

(84) Benannte Vertragsstaaten:
AT BE CH DE FR GB IT LI LU NL SE

(56) Entgegenhaltungen:
CH - A - 504 660
FR - A - 2 181 256
FR - A - 2 501 309

(73) Patentinhaber: Schweizerische Aluminium AG,
CH-8212 Neuhausen am Rheinfall (CH)

(72) Erfinder: RÖLLIN, Ulrich, Am Suteracher 31,
CH-8048 Zürich (CH)

EP 0 185 678 B1

## Beschreibung

Die Erfindung betrifft einen Wagenkastenaufbau für Strassen- oder Schienenfahrzeuge in Leichtbauweise aus einem Dach, einem Boden und Seitenwandelemente, welche letztere über Obergurtprofile mit dem Dach und über Untergurtprofile mit dem Boden verbunden sind. (Siehe FR-A-2181256.)

Bis zum heutigen Zeitpunkt werden bei Kastenwagen, beispielsweise mit isolierten Aufbauten, die einzelnen Wandelemente, wie Bleche, Pfostenprofile, Verbundplatten etc., gegenseitig mittels Schrauben oder Nieten, durch Schweissen, Klemmen oder Kleben verbunden. Dabei ist zu beachten, dass das Kleben gegenüber dem Schrauben oder Nieten den Vorteil hat, dass keine Löcher erforderlich sind. Gegenüber dem Schweissen brauchen keine Verputz- oder Richtarbeiten nachträglich durchgeführt werden. Aufgrund dieser Vorteile ist zu erwarten, dass das Kleben in Zukunft bei Fahrzeugaufbauten aller Art immer mehr an Bedeutung gewinnt. Falls die je nach Klebstoff erforderlichen Vorkehrungen, wie Reinigung, Einhaltung einer bestimmten Luftfeuchtigkeit bzw. Raumtemperatur etc., beachtet werden, können dauerhafte und hochbelastbare Klebungen erhalten werden. Die Problematik bei einer Klebeverbindung ist daher nicht das eigentliche Kleben, sondern vielmehr die konstruktive Gestaltung und die Fixiermöglichkeiten, bis die Klebestelle ihre zugedachte, tragende und verbindende Funktion teilweise oder vollumfänglich erfüllen kann.

Bei den bekannten Wagenkastenaufbauten mit Klebeverbindungen sind die Profile so ausgebildet, dass die von der Fahrzeuginnenseite zu montierenden Wandelemente in direkter Richtung (keine Nute) eingeklebt werden können. Dies hat den Nachteil, dass alle auf die Wand einwirkenden Kräfte nur über eine einseitige Klebestelle eingeleitet werden. Mit anderen Worten entspricht diese Verbindung der „einschnittigen" Nietverbindung. Alle Kräfte werden von demselben Materialquerschnitt übertragen. Während der Aushärtezeit des Klebers muss deshalb eine Fixiervorrichtung zur Verfügung stehen.

Der Erfinder hat sich die Aufgabe gestellt, einen Wagenkastenaufbau so auszugestalten, dass die Aufbaukonstruktion selbst als Fixiereinrichtung dient und nach Vollzug der Klebung nicht mehr entfernt werden muss, sondern eine tragende Funktion beim fertigen Fahrzeug übernimmt.

Die Aufgabe wird erfindungsgemäss dadurch gelöst, dass das Obergurtprofil und das Untergurtprofil mit jeweils mindestens einer angeformten Fahne versehen sind, die der Aussenfläche des Seitenwandelements, des Daches und/oder des Bodens anliegen, wobei Fahne/n und Aussenfläche mittels eines Klebstoffes verbunden sind, und durch jeweils wenigstens ein am Ober- und Untergurtprofil angeschraubtes Profilstück zu einer eine Stirnfläche des Seitenwandelements, des Daches oder des Bodens aufnehmenden U-förmigen Rinne ergänzt sind.

Gegenüber der Fahne/n werden die Seitenwandelemente, das Dach und/oder der Boden von einem oder mehreren Profilstück/en gehalten, welche/s einerseits am Obergurt- bzw. Untergurtprofil über eine in eine hinterschnittene Nut eingreifende und dort ein parallelogrammartiges Klemmstück als Mutter durchdringende Schraube festgelegt und andererseits bevorzugt an dem Seitenwandelement angeklebt ist/sind. Durch diese zweite Klebestelle wird eine mechanisch doppelt wirkende Verbindung gebildet. Zusätzliche Montage- bzw. Fixiereinrichtungen erübrigen sich. Die erwähnte Schraubverbindung per se ist im übrigen aus der DE-A 27 51 753 bekannt.

Die Profilstücke weisen querschnittlich angenähert eine Z-Form auf, wobei die Versetzung etwa in der Mitte des Profilstückes der Differenz zwischen der Dicke der Seitenwandelemente und der Profilstärke des Ober- bzw. Untergurts entspricht. Damit können auf einfache Weise verschiedene Stärken der Seitenwand-, Dach- und/oder Bodenelemente eingesetzt werden, indem die Versetzung variiert wird. Andererseits können mit der gleichen Versetzung auch grössere Fabrikationstoleranzen der Elemente ausgeglichen werden. Ein Profilstück selbst kann kurz ausgebildet und in vorteilhaft regelmässigen Abständen montiert sein oder sich einstückig über die gesamte Länge des Wagenkastenprofils erstrecken.

Die haftende Verbindung zwischen den Fahnen und/oder Profilstücken und den Seitenwand-, Dach- und Bodenelementen kann mittels eines flüssig aufgetragenen Klebstoffes oder eines eingelegten Klebebandes hergestellt werden.

Der Wagenkastenaufbau für Strassen- oder Schienenfahrzeuge in Leichtbauweise gemäss vorliegender Erfindung kann durch verschiedene Varianten von Verbindungstechniken hergestellt werden, wobei jedoch sowohl die Ober- als auch die Untergurtprofile stets mit den Seitenwandelementen verklebt sind:

— Auch die Dachelemente sind mit den Obergurtprofilen und die Bodenelemente mit den Untergurtprofilen verklebt.

— Nur die Dach- oder Bodenelemente sind mit den entsprechenden Gurtprofilen verklebt. Das nicht verklebte Dach ist von Dachspriegeln, der nicht geklebte Boden von Querträgern durchsetzt, wobei die Dachspriegel bzw. die Querträger über Eckverbindungen mit den Ober- bzw. Untergurtprofilen verbunden sind.

— Weder die Dach- noch die Bodenelemente sind geklebt, sondern beide über Dachspriegel bzw. Querträger mittels Eckverbindungen am entsprechenden Gurtprofil befestigt.

Die Eckverbindungen sind bevorzugt gemäss der DE-A 27 51 753 ausgebildet.

Sowohl bei Klebe- als auch bei Eckverbindungen kann auf den Einsatz von Nieten od.dgl., was die Anbringung von zusätzlichen Löchern bedingt, verzichtet werden, da die eingesetzten Klemmstücke in Profilaussparungen befestigt werden können.

Bei einem geschlossenen Wagenkastenaufbau hat es sich als günstig erwiesen, als Seitenwand-, Dach- und/oder Bodenelemente Kunststoff-Verbundplatten, Aluminium-Kunststoffverbundplatten bzw. Stahl-Kunststoffverbundplatten, Holz- oder andere an sich bekannte Platten zu verwenden, da diese in besonderer Weise zum Eingehen von Klebeverbindungen geeignet sind. Gleichzeitig bieten sie betreffend ihres Isolationsvermögens und ihrer mechanischen Eigenschaften erhebliche Vorteile, wobei die Bodenplatten zur Erhöhung der Trittfestigkeit verstärkt sein können.

Die Erfindung wird anhand der Zeichnung beispielsweise näher erläutert. Es zeigen schematisch:

Fig. 1: einen Querschnitt durch eine obere Hälfte eines Aufbaus eines Kastenwagens in Gebrauchslage;

Fig. 1a: einen Querschnitt durch eine untere Hälfte eines Aufbaus eines Kastenwagens in Gebrauchslage;

Fig. 2: Teile der Fig. 1 in sog. Explosionszeichnung;

Fig. 2a: Teile der Fig. 1a in sog. Explosionszeichnung;

Fig. 3: einen Querschnitt des oberen Teils eines Wagenkastenaufbaus ähnlich Fig. 1, wobei ausschliesslich Klebeverbindungen eingesetzt sind;

Fig. 3a: einen Querschnitt des unteren Teils eines Wagenkastenaufbaus ähnlich Fig. 1a, wobei ausschliesslich Klebeverbindungen eingesetzt sind;

Fig. 3b: eine Variante von Fig. 3a betreffend den Untergurt;

Fig. 4 und 5: eine vergrösserte Eckverbindung aus Fig. 1 bzw. 1a und ein entsprechendes Klemmstück.

Fig. 4a und 5a: eine versenkbare Variante der Eckverbindung, und

Fig. 6: ein Klemmstück.

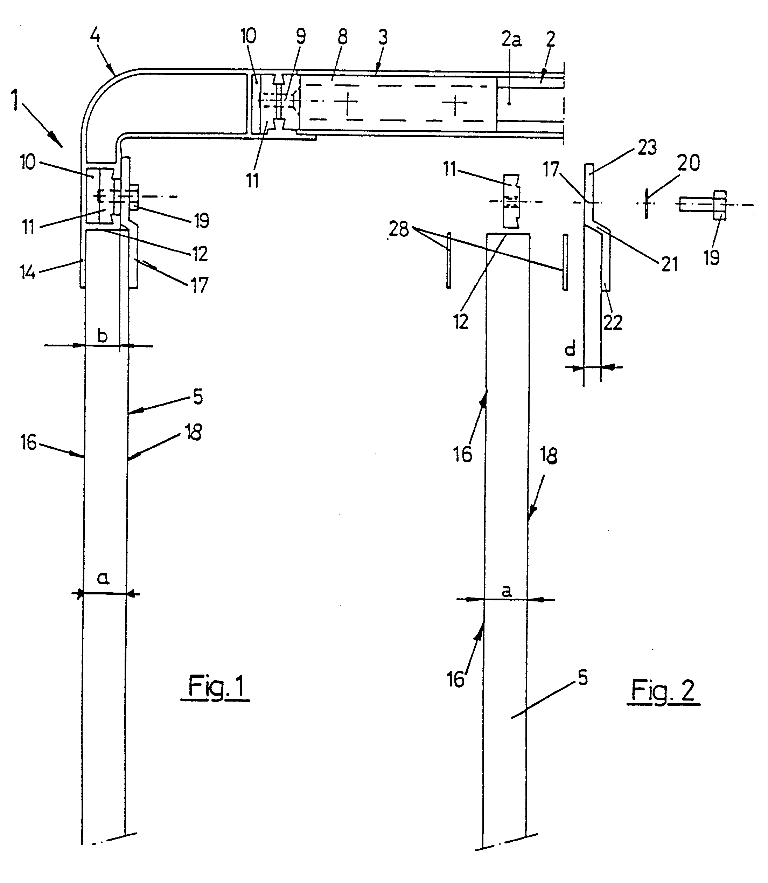

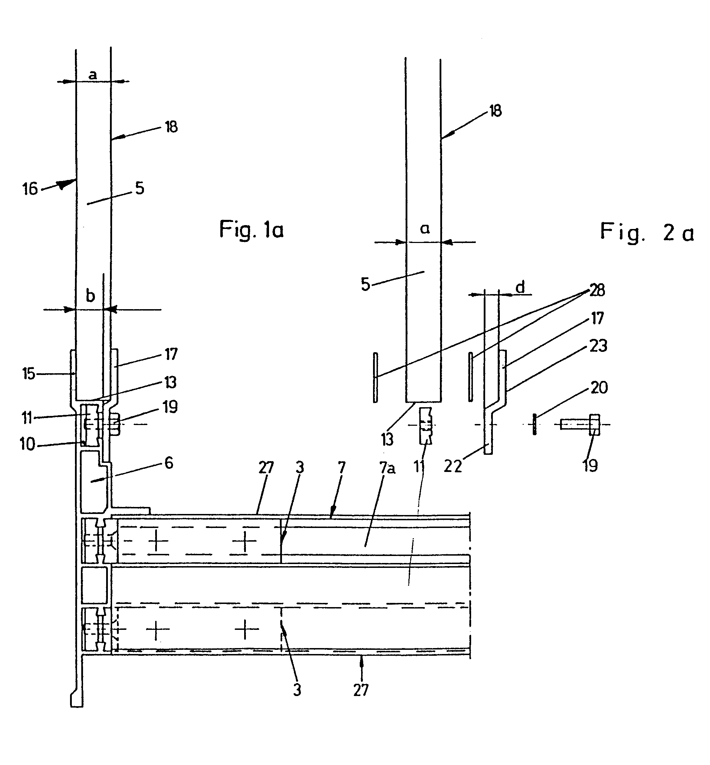

Bei einem Aufbau 1 eines nicht weiter dargestellten Kastenwagens ist in Fig. 1 ein Dach 2 mit Dachspriegeln 2a über eine Eckverbindung 3 an ein Obergurtprofil 4 angeschlossen, das andererseits durch Kleben mit einem Seitenwandelement 5 verbunden ist. Letzteres wiederum ruht verklebt auf einem in Fig. 1a dargestellten Untergurtprofil 6, das über eine weitere Eckverbindung 3 an einen Boden 7 anschliesst. Von diesem Boden sind aus Gründen besserer Übersichtlichkeit lediglich Querträger 7a gezeigt. Am Querträger 7a sind derartige Eckverbindungen 3 an beiden Trägerflächen 27 vorgesehen.

Das Seitenwandelement 5 trifft mit seinen jeweiligen Stirnflächen 12 und 13 auf das Obergurtprofil 4 bzw. das Untergurtprofil 6. Sowohl an das Obergurtprofil 4 als auch an das Untergurtprofil 6 ist eine Fahne 14 bzw. 15 angeformt, welche in Gebrauchslage der Aussenfläche 16 des Seitenwandelements 5 anliegt und mit diesem durch eine flüssig aufgetragene Kleberschicht verbunden ist. Der weiteren Halterung des Seitenwandelements 5 (der Dicke a) dienen Profilstücke 17, welche beidends des Seitenwandelements 5 dessen Innenfläche 18 übergreifen und mit dieser verklebt sind, während sie andernends — unter Zwischenschaltung von Unterlagscheiben 20 (Fig. 2 bzw. 2a) — von einer Schraube 19 durchsetzt sind, die ihrerseits in hinterschnittene Nuten 10 ragt und dort in ein Schraubloch eines Klemmstückes 11 eingreift.

Fig. 2 bzw. 2a zeigen, dass das Profilstück 17 zwei durch eine Stufe 21 parallel zueinander seitenversetzte Profilleisten 22, 23 aufweist, wobei das Mass d der Versetzung der Differenz zwischen Plattendicke a des Seitenwandelements 5 und innerer Weite b der Ober- bzw. Untergurtprofile 4, 6 (Fig. 1 bzw. 1a) entspricht. Zwischen die Profilfahnen und die Aussenfläche 16 des Seitenwandprofils 5 sowie dessen Innenfläche 18 und die Profilleisten 22 der Profilstücke 17 werden bekannte Klebebänder 28 gelegt.

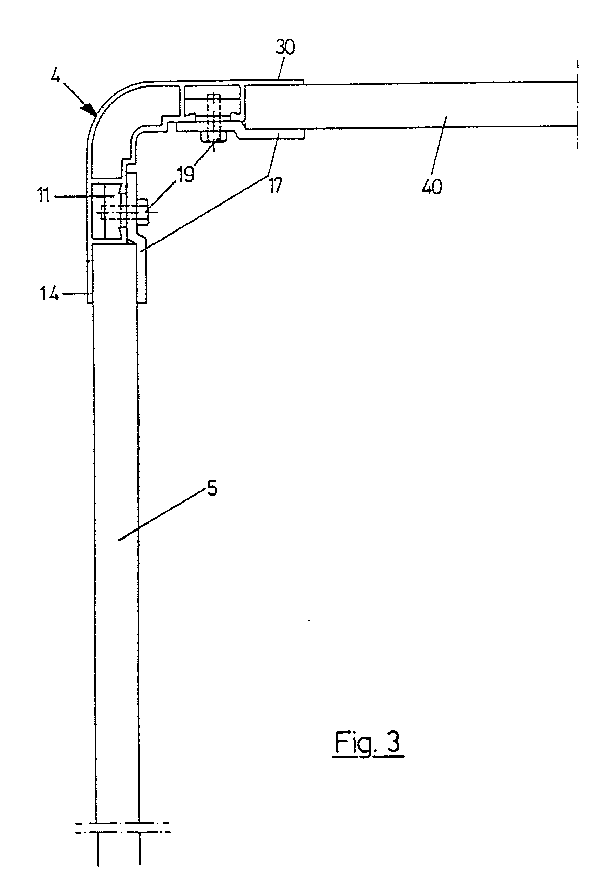

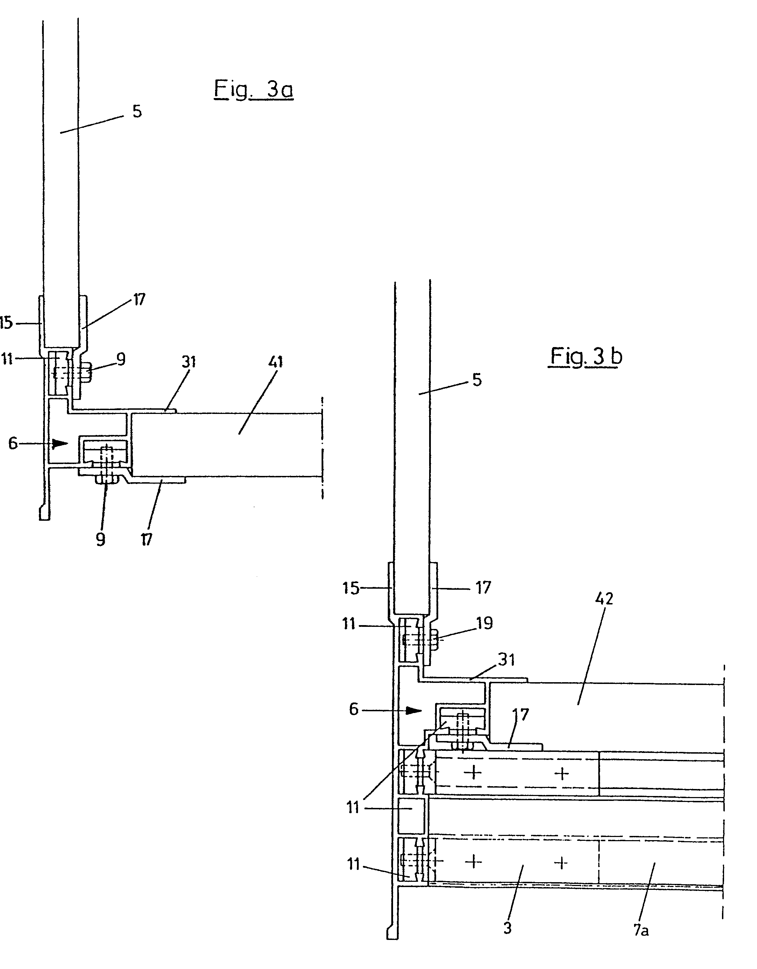

Der Ausschnitt aus dem Wagenkastenaufbau der Fig. 3, 3a und 3b entspricht weitgehend Fig. 1. Im Dach- und Bodenbereich werden jedoch keine Eckverbindungen eingesetzt, sondern ebenfalls Klebeverbindungen mit Profilfahnen 30, 31 und Profilstücken 17, die denjenigen der Seitenwandelemente 5 analog sind. Fig. 3 zeigt die Verbindung mit einer der Seitenwand 5 entsprechenden Verbundplatte als Dachelement 40. Fig. 3a stellt die Verbindung mit einem anstelle der Querträger eingesetzten, selbsttragenden Boden 41 dar. Fig. 3b zeigt eine Kombination im Untergurtbereich von Fig. 1a und 3a. Diese Ausführungsvariante erlaubt, auch nicht selbsttragende Bodenausführungen 42 mit Querträgern 7a zu ergänzen, welche mit einer Eckverbindung 3 an das Untergurtprofil 6 verbunden sind.

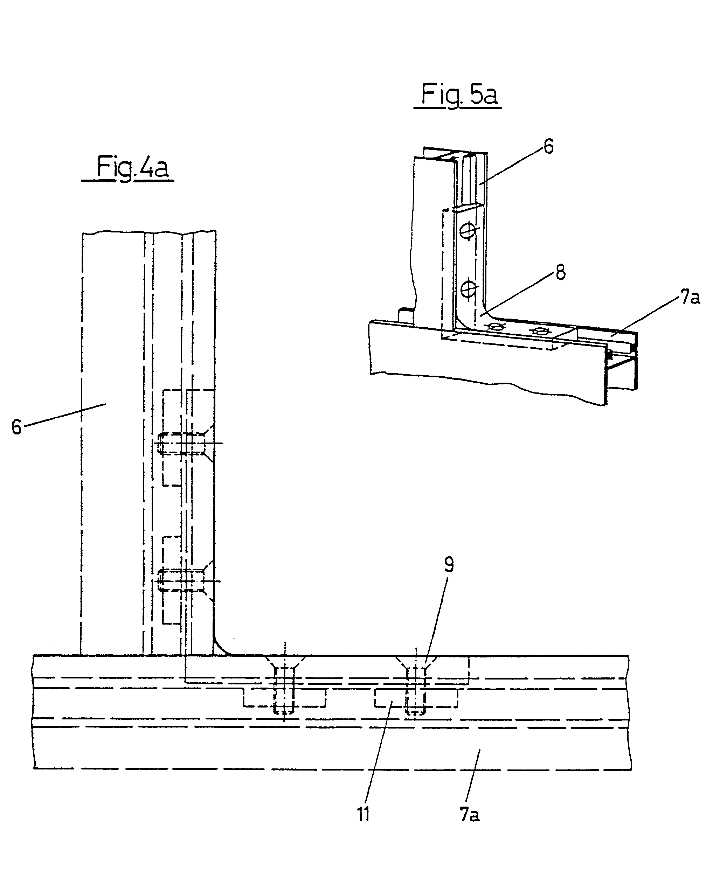

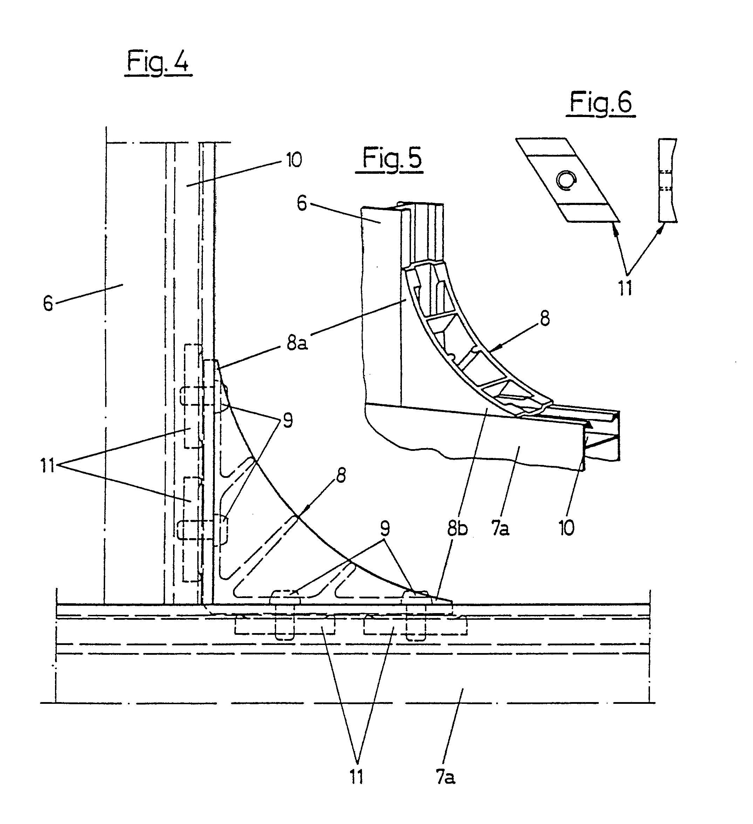

Eine Eckverbindung 3 besteht gemäss Fig. 4, 5 und 6 im wesentlichen aus einem Eckstück 8 in Winkelform und dieses durchsetzenden Schrauben 9. Die Schrauben 9 eines Winkelschenkels 8a bzw. 8b greifen gemeinsam in eine hinterschnittene Nut 10 des Untergurtprofils 6 bzw. des Querträgers 7a ein, wo sie in Schraublöchern von Klemmstücken 11 parallelogrammartigen Umrisses enden.

Fig. 4a und 5a zeigen die Eckverbindung 3 in versenkter Ausführung. Diese Eckverbindungsvariante ermöglicht eine maximale Durchgangsöffnung zwischen dem Untergurtprofil 6 und den Querträgern 7a, falls in diesem Bereich Öffnungen (Türen, Klappen) erforderlich sind.

## Patentansprüche

1. Wagenkastenaufbau für Strassen- oder Schienenfahrzeuge in Leichtbauweise aus einem Dach (2, 40), einem Boden (7, 41, 42) und Seitenwandelementen (5), welche letztere über Obergurtprofile (4) mit dem Dach und über Untergurtprofile (6) mit dem Boden verbunden sind, dadurch gekennzeichnet, dass das Obergurtprofil (4) und das Untergurtprofil (6) mit jeweils mindestens einer angeformten Fahne (14, 15 bzw. 30, 31) versehen sind, die der Aussenfläche (16) des Seitenwandelements (5), des Daches (40) und/oder des Bodens (41, 42) anliegen, wobei Fahne/n und Aussenfläche mittels eines Klebstoffes verbunden sind, und durch jeweils wenigstens ein am Ober- und Untergurtprofil (4, 6) angeschraubtes Profilstück (17) zu einer eine Stirnfläche (12, 13) des Seitenwandelements (5), des Daches (40) oder des Bodens (41, 42) aufnehmenden U-förmigen Rinne ergänzt sind.

2. Wagenkastenaufbau nach Anspruch 1, dadurch gekennzeichnet, dass zwischen der/den Fahne/n (14, 15 bzw. 30, 31) und dem Seitenwandelement (5), dem Dach (40) und/oder dem Boden (41, 42) ein Klebeband (28) eingelegt ist.

3. Wagenkastenaufbau nach Anspruch 1 oder 2, dadurch gekennzeichnet, dass der Anschluss an das Dach (2) und/oder den Boden (7) mittels Eckverbindungen (3) erfolgt, welche als Verbindungselemente dienen, die mittels an Schrauben (9) gehaltener Klemmstücke (11) in hinterschnittene Nuten (10) benachbarter Teile des Ober- bzw. Untergurtprofils (4, 6) eingreifen.

4. Wagenkastenaufbau nach einem der Ansprüche 1 bis 3, dadurch gekennzeichnet, dass die Profilstücke (17) am Obergurtprofil (4) bzw. am Untergurtprofil (16) über eine in eine hinterschnittene Nut (10) des Ober- bzw. Untergurtprofils (4, 6) eingreifende und dort ein parallelogrammartiges Klemmstück (11) als Mutter durchdringende Schraube (19) gehalten ist.

5. Wagenkastenaufbau nach Anspruch 4, dadurch gekennzeichnet, dass die Profilstücke (17) an das Seitenwandelement (5), das Dach (40) und/oder den Boden (41, 42) angeklebt sind.

6. Wagenkastenaufbau nach Anspruch 5, dadurch gekennzeichnet, dass zwischen dem/den Profilstück/en (17) und dem Seitenwandelement (5), dem Dach (40) und/oder dem Boden (41, 42) ein Klebeband (28) eingelegt ist.

7. Wagenkastenaufbau nach einem der Ansprüche 1 bis 6, dadurch gekennzeichnet, dass die Profilstücke (17) beidseits einer Stufe (21) zueinander parallele Profilstreifen (22, 23) aufweisen, wobei eine Versetzung (d) der Differenz zwischen der Dicke (a) des Seitenwandelements (5), des Daches (40) oder des Bodens (41, 42) einerseits und der inneren Weite (b) des Ober- bzw. des Untergurtprofils (4, 6) andererseits entspricht.

8. Wagenkastenaufbau nach einem der Ansprüche 1 bis 7, dadurch gekennzeichnet, dass das Seitenwandelement (5), das Dach (40) und/oder der Boden (41, 42) aus einem Kunststoff- oder Holzkern und Deckschichten aus Aluminium, Stahl oder einem Hartkunststoff besteht.

## Claims

1. A car body structure for road or rail vehicles in lightweight construction, consisting of a roof (2, 40), a floor (7, 41, 42) and sidewall elements (5) which are connected to the roof via upper chord sections (4) and to the floor via lower chord sections (6), characterized in that the upper chord section (4) and the lower chord section (6) are each provided with at least one lug (14, 15 resp. 30, 31) moulded on, which rests against the outer face (16) of the sidewall element (5), of the roof (40) and/or of the floor (41, 42), lug(s) and outer face being connected by means of an adhesive, and through in each case at least one profiled piece (17) screwed onto the upper and lower chord section (4, 6) are completed into a U-shaped trough which receives one endface (12, 13) of the sidewall element (5), of the roof (40) or of the floor (41, 42).

2. A car body structure as in Claim 1, characterized in that between the lug(s) (14, 15 resp. 30, 31) and the sidewall element (5), the roof (40) and/or the floor (41, 42) an adhesive strip (28) is inserted.

3. A car body structure as in Claim 1 or 2, characterized in that the connection to the roof (2) and/or the floor (7) is effected by means of corner connectors (3) which serve as connector elements which engage by means of clamping pieces (11) held against screws (9) in undercut grooves (10) in adjacent parts of the upper or lower chord section (4, 6) respectively.

4. A car body structure as in one of the Claims 1 to 3, characterized in that the profiled pieces (17) are held against the upper chord section (4) or respectively against the lower chord section (16) by a screw (19) which engages in an undercut groove (10) in the upper or lower chord section (4, 6) respectively and there penetrates as a nut a parallelogramlike clamping-piece (11).

5. A car structure as in Claim 4, characterized in that the profiled pieces (17) are glued onto the sidewall element (5), the roof (40) and/or the floor (41, 42).

6. A car body structure as in Claim 5, characterized in that between the profiled piece(s) (17) and the sidewall element (5), the roof (40) and/or the floor (41, 42) an adhesive strip (28) is inserted.

7. A car body structure as in one of the Claims 1 to 6, characterized in that the profiled pieces (17) exhibit on both sides of a step (21) profiled strips (22, 23) parallel with one another, an offset (d) corresponding with the difference between the thickness (a) of the sidewall element (5), the roof (40) or the floor (41, 42) on the one hand and the inside width (b) of the upper or lower chord section (4, 6) respectively on the other.

8. A car body structure as in one of the Claims 1 to 7, characterized in that the sidewall element (5), the roof (40) and/or the floor (41, 42) consist of a plastics or wooden core and covering layers of aluminium, steel or a hard plastics.

## Revendications

1. Carrosserie pour véhicules routiers ou ferroviaires de construction légère, composée d'un toit (2, 40), d'un plancher (7, 41, 42) et d'éléments de parois latérales (5) lesquels sont assemblés au toit par des profilés (4) de ceinture supérieure et au plancher par l'intermédiaire de profilés (6) de ceinture inférieure, caractérisée en ce que le profilé (4) de ceinture supérieure et le profilé (6) de ceinture inférieure sont munis chacun d'au moins un bandeau (14, 15 ou 30, 31) venu de matière, qui est appuyé contre la surface externe (16) de l'élément de paroi latérale (5), du toit (40) et/ou du plancher (41, 42), le bandeau ou les bandeaux et la surface externe étant réunis au moyen d'un colle et étant complétés chacun par un morceau de profilé (17) boulonné sur le profilé de ceinture supérieure ou de ceinture inférieure (4, 6) pour former une rainure en U qui reçoit une surface de chant (12, 13) de l'élément de paroi latérale (5), du toit (40) ou du plancher (41, 42).

2. Carrosserie selon la revendication 1, caractérisée en ce qu'une bande adhésive est interposée entre le bandeau ou les bandeaux (14, 15 ou 30, 31) et l'élément de paroi latérale (5), le toit (40) et/ou le plancher (41, 42).

3. Carrosserie selon l'une des revendications 1 et 2, caractérisée en ce que le raccordement au toit (2) et/ou au plancher (7) est réalisé au moyen de joints d'angles (3) qui servent d'éléments d'assemblage qui sont en prise, au moyen d'éléments de serrage (11) fixés à des vis (9), dans des rainures à contre-dépouille (10) de parties adjacentes du profilé de ceinture supérieure ou de ceinture inférieure (4, 6).

4. Carrosserie selon l'une des revendications 1 à 3, caractérisée en ce que les morceaux de profilé (17) sont fixés sur le profilé de ceinture supérieure (4) ou de ceinture inférieure (16) au moyen d'une vis (19) qui est engagée dans une rainure à contre-dépouille (10) du profilé de ceinture supérieure ou de ceinture inférieure (4, 6) et, là, traverse un élément de serrage (11) en forme de parallélogramme qui sert d'écrou.

5. Carrosserie selon la revendication 4, caractérisée en ce que les morceaux de profilé (17) sont collés à l'élément de paroi latérale (5), au toit (40) et/ou au plancher (41, 42).

6. Carrosserie selon la revendication 5, caractérisée en ce qu'une bande adhésive (28) est interposée entre le ou les morceau(x) de profilé (17) et l'élément de paroi latérale (5), le toit (40) et/ou le plancher (41, 42).

7. Carrosserie selon l'une des revendications 1 à 6, caractérisée en ce que les morceaux de profilé (17) présentent de part et d'autre d'un redan (21) des ailes (22, 23) parallèles entre elles, le déport (*d*) correspondant à la différence entre l'épaisseur (*a*) de l'élément de paroi latérale (5), du toit (40) ou du plancher (41, 42), d'une part, et la largeur libre intérieure (*b*) du profilé de ceinture supérieure ou inférieure (4, 6), d'autre part.

8. Carrosserie selon l'une des revendications 1 à 7, caractérisée en ce que l'élément de paroi latérale (5), le toit (40) et/ou le plancher (41, 42) sont composés d'une âme en matière plastique ou en bois et de couches de revêtement en aluminium, en acier, ou en une matière plastique dure.

Fig.1

Fig. 2

Fig. 1a

Fig. 2 a

Fig. 3

Fig. 3a

Fig. 3 b

Fig. 5a

Fig. 4a

6

8

7a

6

9

11

7a

Fig. 4

Fig. 5

Fig. 6

10

6

6

8a

8

9

11

8

9

8b    7a    10

11    7a

11